# EUROPEAN PATENT SPECIFICATION

(11) **EP 1 024 512 B1**
(45) Date of publication and mention of the grant of the patent: **29.12.2004**
(21) Application number: 98950318.0
(22) Date of filing: 21.10.1998
(51) Int. Cl.: H01H 59/00

(54) **ELECTROSTATIC MICRO-RELAY**
ELEKTROSTATISCHES MIKRORELAIS
MICRO-RELAIS ELECTROSTATIQUE

(30) Priority: 21.10.1997 JP 28840597
(43) Date of publication of application: 02.08.2000
(73) Proprietor: OMRON CORPORATION, Kyoto-shi, Kyoto 616-8025 (JP)
(72) Inventor: SAKATA, Minoru, Omron Corporation, Kyoto-shi, Kyoto 616-8025 (JP); KOMURA, Yoshiyuki, Omron Corporation, Kyoto-shi, Kyoto 616-8025 (JP); NAKAJIMA, Takuya, Omron Corporation, Kyoto-shi, Kyoto 616-8025 (JP); SEKI, Tomonori, Omron Corporation, Kyoto-shi, Kyoto 616-8025 (JP)
(74) Representative: Kilian, Helmut, Dr.
(86) International application number: PCT/JP1998/004759
(87) International publication number: WO 1999/021204

(56) References cited:
- DE-A- 4 305 033
- DE-C- 4 205 029
- DE-C- 4 205 340
- DE-C- 4 437 259
- JP-A- 7 045 175
- JP-A- 8 227 646
- JP-T- 8 509 093

## Description

### TECHNICAL FIELD

The present invention relates to an electrostatic microrelay which is driven by electrostatic attraction.

### BACKGROUND ART

Conventionally, for example, there has been provided an electrostatic microrelay having a flat fixed electrode and a bent movable electrode (Japanese Patent Laid-Open Publication HEI 8-255546). In this electrostatic microrelay, by driving the movable electrode with electrostatic attraction that occurs when a voltage is applied to the electrodes, a movable contact provided at a free end portion of the movable electrode is put into contact, i.e. making contact, with a fixed contact provided in the fixed electrode.

However, in this electrostatic microrelay, increasing the contact pressure at making contact involves suppressing the elasticity of the bent portion of the movable electrode. This would be a problem because the opening force at contact-breaking decreases, resulting in a deteriorated response characteristic. Conversely, increasing the elasticity at the bent portion of the movable electrode would necessitate a large driving force for the movable electrode to be attracted to the fixed electrode, which leads to a problem where the drive voltage must be increased. That is, the movable electrode is required to have two contradictory characteristics, which cannot be achieved by the electrostatic microrelay as constituted above.

### DISCLOSURE OF THE INVENTION

The present invention, acknowledging the above problems, it is an object of the invention to provide an electrostatic microrelay with a good response characteristic and capable of suppressing the drive voltage. An electrostatic microrelay according to the preamble of claim 1 is known from DE-C-4205340.

In order to achieve the above object, according to the present invention, there is provided an electrostatic microrelay according to claim 1 in which a fixed base contact and a movable contact on a movable substrate are contactable with and separable from each other based on an electrostatic attraction generated with a voltage applied to a fixed electrode of the base and the movable electrode of the movable substrate, wherein the movable electrode is evenly supported on the base via at least two first elastic support portions.

With this arrangement, when a voltage is applied to between the fixed electrode and the movable electrode which are opposite each other, the first elastic support portions are flexed by the electrostatic attraction, so that the movable contact and the fixed contact are put in contact with each other. Since the first elastic support portions are provided at least in pairs, the elasticity at each first elastic support portion is a small one which acts evenly. Therefore, the movable electrode is smoothly attracted to the fixed electrode so that the movable contact and the fixed contact exhibit stable and reliable contact making. As a result, contact reliability is improved. Also, upon removing the electrostatic attraction between the electrodes, the elasticity of the elastic support portion acts to break contact.

In the electrostatic microrelay as defined above, the first elastic support portions are disposed opposite the fixed electrode, in which case electrostatic attraction can also be generated between the first elastic support portions and the fixed electrode in order to suppress the drive voltage.

Also according to the invention, the movable contact is supported on the movable substrate via a second elastic support portion which has an elasticity greater than the first elastic support portions which further improves contact reliability.

More specifically, in this constitution, when a voltage is applied to the fixed electrode situated opposite each other, the elastic support portions are flexed by electrostatic attraction, causing the movable electrode to move closer to the fixed electrode, resulting in the movable contact making contact with the fixed contact. In this state, an even greater electrostatic attraction is generated because of the smaller distance between the fixed and movable electrodes as opposed to their initial state which causes the second elastic portion to flex in such a way that the movable electrode is attracted to the fixed electrode. Since the second elastic support portion has greater elasticity than the first elastic support portions, a large load is needed for the movable contact, the movable contact makes contact with the fixed contact. Thus, without occurrence of any malfunctions due to vibrations or the like, the movable contact is put into making contact with the fixed contact at a desired contact pressure by the second elastic support portion. As a result, this arranegment enhances contact reliability.

The first elastic support portions may be made using at least two first beam portions extending sideways from anchors standing on the base, and the second elastic support portion may be made using a second beam portion obtained by at least one opening portion formed beside the movable contact on a movable substrate. This stabilizes the operating characteristics.

When the movable substrate is made using a single crystal silicon substrate, all the constituents can be manufactured using the semiconductor process, where variations in dimensional precision can be suppressed while attaining a specific life characteristic.

When the base is made using a glass substrate, the movable substrate formed of a single crystal silicon substrate can be integrated by anodic bonding, facilitating the assembly work. Further, capacitance among the fixed electrode, the fixed contact, interconnections and connecting pads on the base can be lowered to improve the components high-frequency characteristics.

### BRIEF DESCRIPTION OF THE DRAWINGS

Fig. 1A is a plane view of an electrostatic microrelay according to the present embodiment and Fig. 1B is a sectional view taken along the line 1B - 1B of Fig. 1A;
Figs. 2A - 2I are sectional views showing manufacturing process of Fig. 1;
Fig. 3A - 3C are a schematic view showing the operating state of the electrostatic microrelay of Fig. 1;
Fig. 4 is an exploded perspective view of the electrostatic microrelay of Fig. 1; and

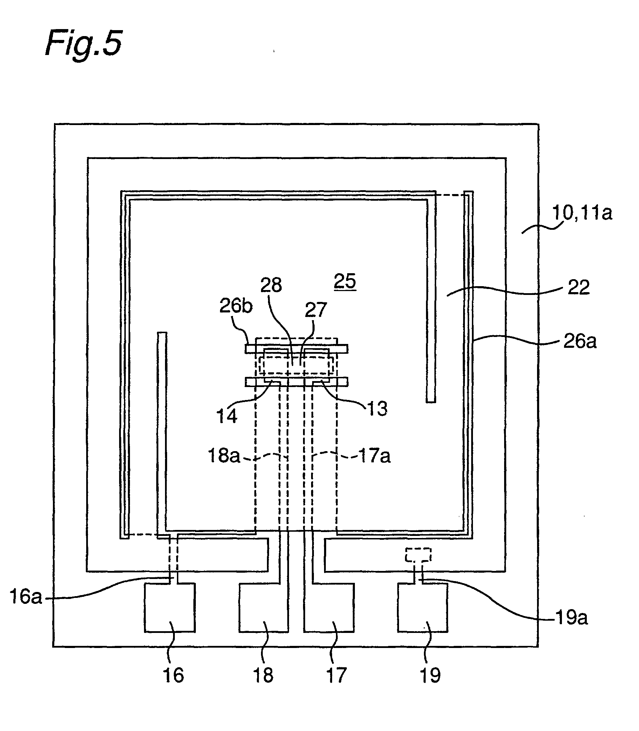

Fig. 5 is a plane view of an electrostatic microrelay according to the first embodiment.

### BEST MODE FOR CARRYING OUT THE INVENTION

Next, an electrostatic microrelay according to the present invention is described with reference to the accompanying drawings.

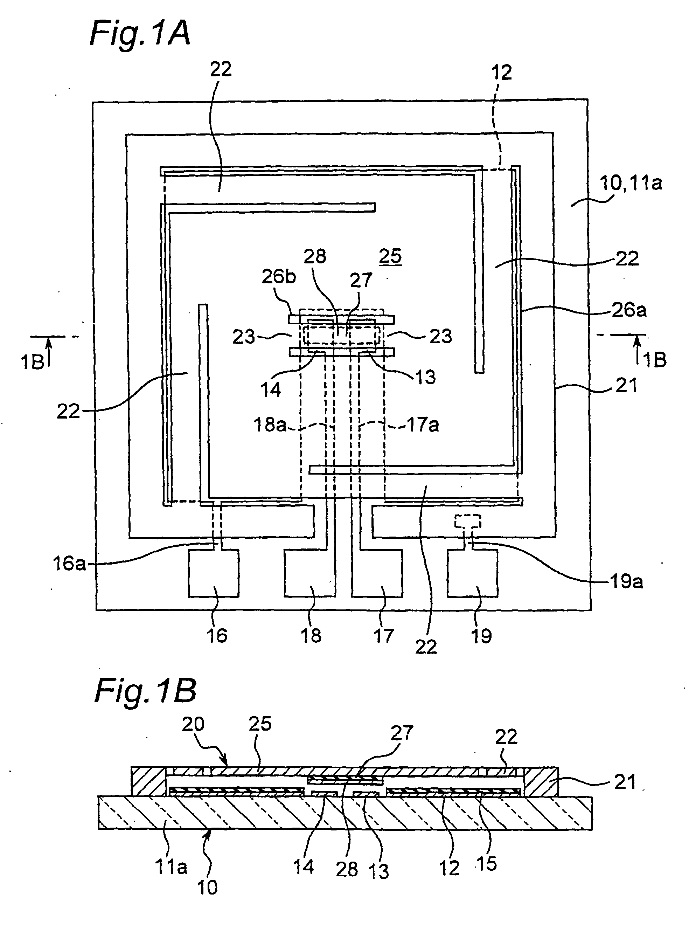

Figs. 1A and 1B show an electrostatic microrelay according to this embodiment. This electrostatic microrelay is formed by integrating a movable substrate 20 made using a silicon wafer, on top of a base 10 made using a glass substrate 11a.

The base 10 has a fixed electrode 12 and fixed contacts 13, 14 provided on the top surface of the glass substrate 11a. The surface of the fixed electrode 12 is coated with an insulating film 15. The fixed electrode 12 and the fixed contacts 13, 14 are connected to connecting pads 16 and 17, 18 via wiring patterns 16a and 17a, 18a, respectively.

The movable substrate 20 has a movable electrode 25 evenly supported via first beam portions 22 extending sideways from the top-surface edge portions of four anchors 21 standing at the top-surface corner portions of the base 10.

The anchors 21 are connected to a connecting pad 19 via a wiring pattern 19a provided on the top surface of the base 10. The movable electrode 25 has second beam portions 23 formed at its center by a pair of slits 26b, 26c. At the center of the second beam portions 23 in the lower surface, is provided a movable contact 28 via an insulating film 27. The movable contact 28 is contactable with, separable from, and situated opposite the fixed contacts 13, 14.

Next, the manufacturing process of an electrostatic microrelay outlined above is described.

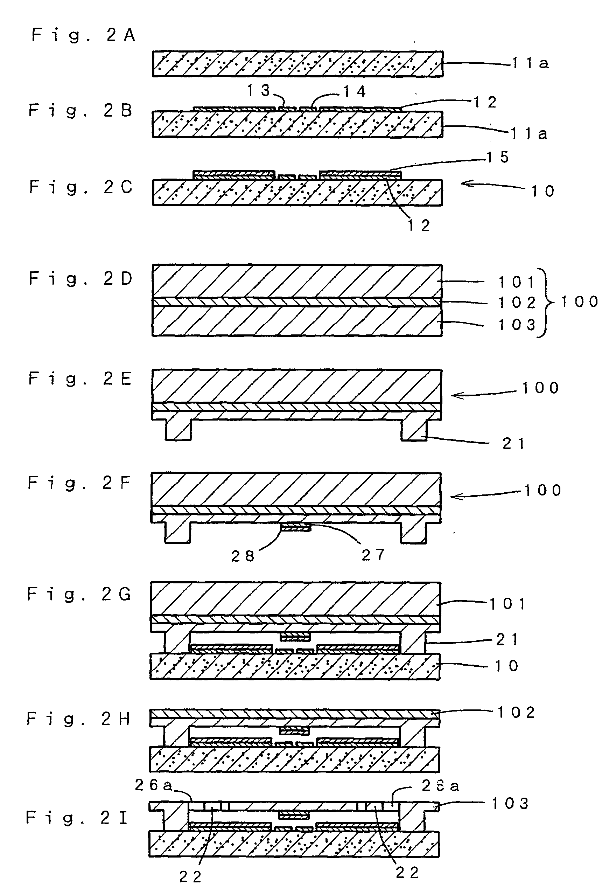

First, as shown in Fig. 2B, the fixed electrode 12 and the fixed contacts 13, 14 are formed on the glass substrate 11a made of Pyrex or the like shown in Fig. 2A with use of Cr, Au or the like by vapor deposition (plating, sputtering or the like). Furthermore, the wiring patterns 16a, 17a, 18a, 19a and the connecting pads 16, 17, 18 and 19 are formed respectively. Then, the insulating film 15 is formed on the fixed electrode 12, by which the base 10 shown in Fig. 2C is completed.

In addition, when a silicon oxide having a relative dielectric constant of 3 - 4 or a silicon nitride having a relative dielectric constant of 7 - 8 is used as the insulating film 15, results in greater attraction between the electrodes and an increase in the contact load.

Meanwhile, as shown in Fig. 2D, in that order from top to bottom to form a contact-to-contact gap in the lower surface of an SOI wafer 100 comprising a silicon layer 101, a silicon oxide layer 102 and a silicon layer 103 in an order from the top, for example, wet etching is performed by using TMAH with silicon oxide as a mask, where the anchors 21 protruding downward are formed as shown in Fig. 2E. Then, an insulating film 27 is formed and thereafter the movable contact 28 is formed as shown in Fig. 2F.

Subsequently, as shown in Fig. 2G, the SOI wafer 100 is integrally coupled with the base 10 by anodic bonding. Then, as shown in Fig. 2H, the top surface of the SOI wafer 100 is etched, thereby thinned, to the silicon oxide layer 102, which is an oxide film made by an alkaline etchant such as TMAH or KOH. Further, the silicon oxide layer 102 is removed by fluoric etchant, exposing the silicon layer 103, i.e, the movable electrode 25 as shown in Fig. 2I. Then, pattern-drawing is done by dry etching with the use of RIE or the like. Using this method, first, second beam portions 22, 23 are cut out and cutout portions 26a and slits 26b, 26c are then formed. Thus, the movable substrate 20 is completed.

In addition, the base 10 is not limited to the glass substrate 11a and may be formed of a single crystal silicon substrate coated, at least at its top surface, with an insulating film.

In this embodiment, the whole movable substrate 20 is formed of a silicon wafer and is point-symmetrical between left and right and line-symmetrical in cross section. This makes the movable electrode 25 less prone to deflection and torsion. As a result of this, inoperability and variations in operating characteristics can be effectively prevented, and moreover ensures smooth operating characteristics.

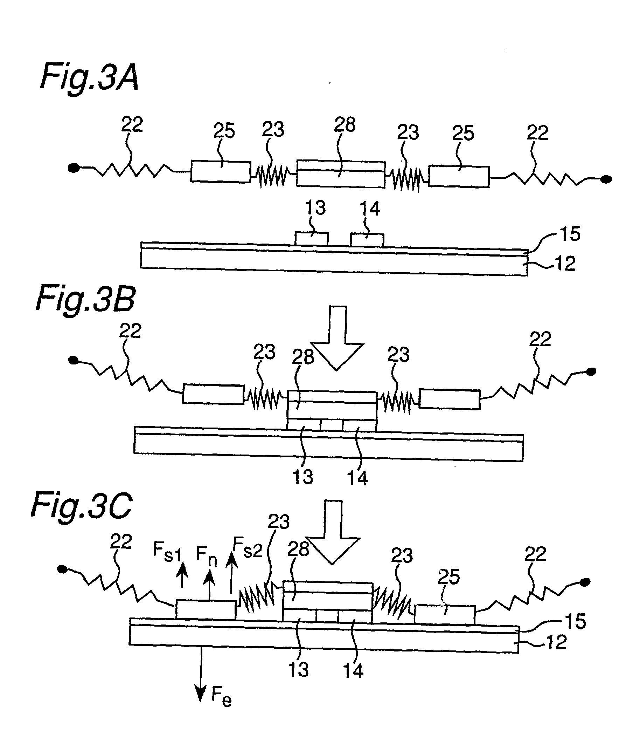

Next, operation of the electrostatic microrelay having the above constitution is described with reference to a schematic view of Fig. 3.

First, parallelism occurs when there is no voltage applied between the fixed electrode 12 and the movable electrode 25, where the movable contact 28 is open separately from the fixed contacts 13, 14 as shown in Figs. 1B and 3A.

Next, applying a voltage between the fixed electrode 12 and the movable electrode 25, the movable electrode 25 creates an electrostatic attraction between the electrodes 12, 25 where the movable electrode 25 is attracted to the fixed electrode 12. Due to this, the first beam portions 22 are flexed, causing the movable electrode 25 to move closer to the fixed electrode 12. As a result, the gap between the electrodes narrows, increasing the electrostatic attraction of the movable electrode 25 to the fixed electrode 12 with a stronger electrostatic attraction until the movable contact 28 makes contact with the fixed contacts 13, 14.

After the movable contact 28 has come into contact with the fixed contacts 13, 14, the second beam portions 23 in addition to the first beam portions 22 are flexed as shown in Fig. 3C, so that the movable electrode 25 is attracted to the insulating film 15, with which the fixed electrode 12 is coated. Therefore, with an arrangement in which the base 10 and the movable substrate 20 are placed opposite each other, the fixed electrode 12 and the movable electrode 25 are held in stabilized parallelism so that the movable contact 28, with its neighboring movable electrode 25 attracted to the fixed electrode 12, are pressed against the fixed contacts 13, 14 via the second beam portions 23. Thus, there never occurs one-side hitting, as would be seen in the prior art, therefore the contact reliability is improved.

In this case, assuming that forces of the first and second beam portions 22, 23, an electrostatic attraction between the movable electrode 25 and the fixed electrode 12 via the insulating film 15, and a reaction force derived from the surface of the insulating film 15 are Fₛ₁, Fₛ₂, Fₑ, Fₙ, then the following relationship holds:${\text{F}}_{\text{e}} {\text{= F}}_{\text{s1}} {\text{+ F}}_{\text{s2}} {\text{+ F}}_{\text{n}}$ so that the lowering of Fₛ₂ , i.e. the contact load, is inhibited by reducing Fₑₙ, Fₛ₁ by designing the spring constant of the first and second beam portions 22, 23, by varying the initial gap between the movable electrode 25 and the fixed electrode 12, by varying the thickness of the contacts and the like.

Accordingly, with the aforementioned voltage application halted, the movable electrode 25 is separated from the fixed electrode 12 by the elasticity of the second beam portion 23 and the first beam portions 22, and thereafter the movable contact 28 is separated from the fixed contacts 13, 14 only by the elasticity of the first beam portions 22 with the movable electrode 25 restored to its original state.

In addition, the movable electrode 25, whereas formed into a flat shape in the above embodiment, may be formed into a thin wall with a recessed portion formed in its top surface. In this case, even at the desired rigidity a light weight electrostatic microrelay with improved operating and restoring speed can be realized.

It is also possible to form an insulating film at the lower surface of the movable electrode, and moreover to stack and integrate thereon one by one a second movable electrode and an insulating film. In this case, by forming the second movable electrode from a material having a high dielectric constant, an even larger electrostatic attraction can be obtained.
It is also possible to increase the rigidity of the movable electrode 25 by increasing its thickness relative to that of the beam portions 22, 23. In this case, the electrostatic attraction can be fully transformed into an attraction force for the movable electrode 25, so that the electrostatic attraction can be efficiently used for the deformation of the first beam portions 22.

It is also possible to provide a protrusion at the peripheral end portion of the lower surface of the movable electrode 25 to create a larger initial electrostatic attraction.

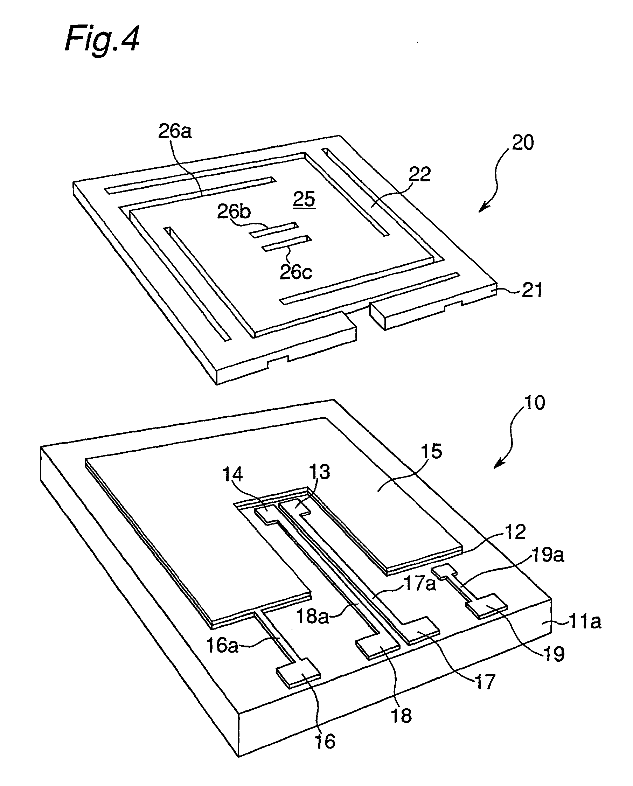

The movable substrate, whereas supported by two or three beam portions in the above embodiment, may also be supported by three or two first beam portions. In this case, it is possible to obtain an electrostatic microrelay with high area efficiency. Fig. 4 shows an actual example of the electrostatic microrelay in which the movable substrate is supported by two first beam portions. This electrostatic microrelay is similar to the electrostatic microrelay of Fig. 1 except that the first beam portions 22 are provided in pairs.

Further, the second beam portions 23, whereas formed of the two slits 26b, 26c, may also be formed of a generally U-shaped opening portion. Further, if the fixed electrode 12 has portions opposed to the first beam portions 22, the fixed electrode 12 can attract not only the movable electrode 25 but the first beam portions 22 as well, which further reduces the drive voltage.

## Claims

1. An electrostatic microrelay in which fixed contacts (13,14) of a base (10) and a movable contact (28) of a movable substrate (20) are contactable with and separable from each other based on an electrostatic attraction generated by applying a voltage between a fixed electrode (12) of the base and a movable electrode (25) of the movable substrate, wherein
at least two first elastic support portions (22) are formed around the movable electrode (25), and
the movable electrode (25) is evenly supported on the base (10) via the first elastic support potions (22) so as to be opposite to the fixed electrode (12),
a second elastic support portion (23) is formed in the center of the movable electrode (25) **characterized in that** said second elastic support potion (23) has a greater elasticity than the first support portions (22),
the movable contact (28) is formed in the center of the lower surface of the second elastic support portion (23) via an insulating film (27) so as to be opposite to the fixed contacts (13, 14),
the first elastic support portions (22) are elastically deformed by the electrostatic attraction generated by applying a voltage between the two electrodes (25, 12), and the movable contact (28) comes into contact with the fixed contacts (13, 14) , the second elastic support portion (23) is elastically deformed further when the movable electrode (25) is attracted to the fixed electrode (12), the elastic energy of the second elastic support portion (23) creating the desired pressure between the movable contact (28) and the fixed contacts (13, 14).

2. An electrostatic microrelay according to Claim 1, wherein the first elastic support portions (22) are supported as to be point-symmetrical.

3. An electrostatic microrelay according to any one of claims 1 or 2, wherein the base (10) is implemented by a glass substrate.

## Patentansprüche

1. Elektrostatisches Mikrorelais, bei welchem Festkontakte (13, 14) einer Basis (10) und ein beweglicher Kontakt (28) eines beweglichen Substrats (20) beruhend auf einer elektrostatischen Anziehung, die durch Anlegen einer Spannung zwischen einer Festelektrode (12) der Basis und einer beweglichen Elektrode (25) des beweglichen Substrats erzeugt wird, miteinander in Berührung bringbar und von einander lösbar sind, wobei
wenigstens zwei erste elastische Halterungsabschnitte (22) um die bewegliche Elektrode (25) herum ausgebildet sind, und
die bewegliche Elektrode (25) an der Basis (10) über die ersten elastischen Halterungsabschnitte (22) gleichmäßig der Festelektrode (12) gegenüberliegend gehaltert wird,
ein zweiter elastischer Halterungsabschnitt (23) in der Mitte der beweglichen Elektrode (25) ausgebildet ist, **dadurch gekennzeichnet, dass** der zweite elastische Halterungsabschnitt (23) eine größere Elastizität als der erste Halterungsabschnitt (22) aufweist,
der bewegliche Kontakt (28) in der Mitte der Unterseite des zweiten elastischen Halterungsabschnitts (23) über einen Isolationsfilm (27) den Festkontakten gegenüberliegend ausgebildet ist,
die ersten elastischen Halterungsabschnitte (22) durch die elektrostatische Anziehung, die durch Anlegen einer Spannung zwischen den beiden Elektroden (25, 12) erzeugt wird, elastisch verformt werden, und der bewegliche Kontakt (28) mit den Festkontakten (13, 14) in Berührung kommt, wonach der zweite elastische Halterungsabschnitt (23) elastisch weiter verformt wird, wenn die bewegliche Elektrode (25) an die Festelektrode (12) angezogen ist, wobei die elastische Energie des zweiten elastischen Halterungsabschnitts (23) den gewünschten Druck zwischen dem beweglichen Kontakt (28) und den Festkontakten (13, 14) erzeugt.

2. Elektrostatisches Mikrorelais nach Anspruch 1, wobei die ersten elastischen Halterungsabschnitte (22) so gehaltert sind, dass sie punktsymmetrisch sind.

3. Elektrostatisches Mikrorelais nach irgendeinem der Ansprüche 1 oder 2, wobei die Basis (10) als Glassubstrat ausgebildet ist.

## Revendications

1. Micro relais électrostatique dans lequel des contacts fixes (13) d'une base (10) et un contact mobile (28) d'un substrat mobile (20) peuvent être en contact avec et séparables l'un de l'autre en fonction d'une attraction électrostatique générée en appliquant une tension entre une électrode fixe (12) de la base et une électrode mobile (25) du substrat mobile, dans lequel,
au moins deux premières parties de support élastique (22) sont formées autour de l'électrode mobile (25), et
l'électrode mobile (25) est supportée sur la base (10) via les premières parties de support élastique (22) afin d'être opposée à l'électrode fixe (12),
une seconde partie de support élastique (23) est formée dans le centre de l'électrode mobile (25), **caractérisée en ce que** ladite partie de support élastique (23) a une élasticité supérieure aux premières parties de support élastique (22),
le contact mobile (28) est formé dans le centre de la surface inférieure de la seconde partie de support élastique (23) via un film isolant (27) afin d'être opposé aux contacts fixes,
les premières parties de support élastique (22) sont déformées élastiquement par l'attraction électrostatique générée en appliquant une tension entre les deux électrodes (25, 12), et le contact mobile (28) vient en contact avec les contacts fixes et alors la seconde partie de support élastique (23) est déformée élastiquement, plus en avant lorsque l'électrode mobile (25) est attirée vers l'électrode fixe (12), l'énergie élastique de la seconde partie de support élastique (23) créant la pression souhaitable entre le contact mobile (28) et les contacts fixes (13, 14).

2. Micro relais électrostatique selon la revendication 1, dans lequel les premières parties de support élastique (22) sont supportées comme étant symétriques par point.

3. Micro relais électrostatique selon l'une quelconque des revendications 1 ou 2, dans lequel la base (10) est mise en oeuvre par un substrat en verre.
